# EUROPEAN PATENT APPLICATION

(11) **EP 4 736 639 A1**
(43) Date of publication of application: **06.05.2026**
(21) Application number: 25211232.1
(22) Date of filing: 27.10.2025
(51) Int. Cl.: A01K 29/00, A01K 1/015, A01K 1/02, A01K 1/03, A01K 1/035, G01G 19/52, H01R 12/70, H01R 12/91, H01R 13/15

(54) **PET CARE DEVICE**

(30) Priority: 29.10.2024 KR 20240149780
(71) Applicant: LG Electronics Inc., Yeongdeungpo-gu Seoul 07336 (KR)
(72) Inventor: CHO, Jinhum, Seoul (KR); HAN, Jaeyoung, Seoul (KR); BAEK, Sanghun, Seoul (KR); SONG, Hoon, Seoul (KR)
(74) Representative: Vossius & Partner Patentanwälte Rechtsanwälte mbB

(57) **Abstract**

Disclosed is a pet care device. The pet care device may include a base, a pad disposed above the base, a pogo pin module including a first printed circuit board (PCB) and a pogo pin, and a connection terminal module mounted to the pad and including a second PCB and a connection terminal electrically connected to the pogo pin. The pogo pin module may be movably disposed between the base and the pad in an upward and downward direction, and a magnet may be mounted to at least one of the pogo pin module and the connection terminal module. When the pad is disposed above the base, the pogo pin module may be moved upward by a magnetic force of the magnet and may come into electrical connection with the connection terminal module.

## Description

### CROSS-REFERENCE TO RELATED APPLICATION

This application claims the priority benefit of Korean Patent Application No. 10-2024-0149780, filed on October 29, 2024 in the Korean Intellectual Property Office.

### BACKGROUND OF THE INVENTION

### Field of the invention

The present disclosure relates to a pet care device, and more particularly to a pet care device in which a pad is disposed above a base so as to allow a pet to be placed thereon.

### Description of the Related Art

As the industry related to pets, such as dogs or cats, is growing, research and development of goods or products related to pets is actively conducted. With the increasing perception of pets as family members, the pet-related industry is expected to continuously grow into a high value-added industry.

With the recent growth of such a pet-related industry, health care of pets has been gaining attention as a promising future industry. Various research is being conducted to monitor pets' health conditions, aiming to prevent or diagnose diseases.

Conventionally, a pogo pin is used to supply power to a pad that monitors a pet's health conditions. The pogo pin is fixed to an upper portion of the base so as to be connected to a connection terminal disposed at the pad. Thus, if the pogo pin is connected to the connection terminal, a fixed point is created in a connection area between the pogo pin and the connection terminal, causing a problem in that it is difficult to accurately measure biometric information such as a pet's weight. This results in the inconvenience of having to repeat diagnosis multiple times in order to accurately diagnose the pet's health conditions.

Further, because the pogo pin and the connection terminal directly receive the loads of the pad and the pet, prolonged use leads to poor electrical connection between the pogo pin and the connection terminal or damage to the pogo pin and the connection terminal.

Furthermore, because a module including the pogo pin is disposed on the upper surface of the base, electrical leakage or short circuit may occur due to the pet's bodily fluid or the like falling onto the base.

### SUMMARY OF THE INVENTION

An aspect of the present disclosure is directed to providing a pet care device capable of solving the above problems with the related art.

Another aspect of the present disclosure may be directed to providing a pet care device capable of accurately measuring a pet's weight while allowing power to be applied to a pad via a base.

A further aspect of the present disclosure may be directed to providing a pet care device in which a pogo pin, to which external power is applied, and a connection terminal disposed at a pad are capable of being automatically electrically connected to each other.

Still another aspect of the present disclosure may be directed to providing a pet care device capable of discharging a fluid such as a pet's bodily fluid to the outside without contact with various electronic elements.

Still another aspect of the present disclosure may be directed to providing a pet care device capable of preventing a pogo pin from being completely separated from a base when moving upward.

The aspects of the present disclosure are not limited to the aspects mentioned above, and other aspects not mentioned herein will be clearly understood by those skilled in the art from the following description.

In accordance with an aspect of the present disclosure for accomplishing the above and other objects, a pet care device may include a base, a pad disposed above the base, a pogo pin module including a first printed circuit board (PCB) and a pogo pin, and a connection terminal module mounted to the pad and including a second PCB and a connection terminal. The pogo pin module may be disposed so as to be movable upward and downward between the base and the pad.

A magnet may be mounted to at least one of the pogo pin module or the connection terminal module so that the pogo pin module moves upward due to the magnetic force of the magnet to be electrically connected to the connection terminal module.

According to an embodiment of the present disclosure, a pet care device may include a base, a pad disposed above the base, a pogo pin module configured to receive external power and including a first PCB and a pogo pin, and a connection terminal module mounted to the pad and including a connection terminal electrically connected to the pogo pin. The pogo pin module may be disposed so as to be movable upward and downward between the base and the pad, and one or more weight sensing elements may be disposed between the base and the pad.

According to an embodiment of the present disclosure, a pet care device may include a base, a pad disposed above the base, a pogo pin module configured to receive external power and including a first PCB and a pogo pin, and a connection terminal module mounted to the pad and including a connection terminal electrically connected to the pogo pin. The pogo pin module may be disposed so as to be movable upward and downward between the base and the pad, the base may include a guide rod protruding upward therefrom, and the pogo pin module may include a guide hole formed therein so as to allow the guide rod to be fitted thereinto.

### BRIEF DESCRIPTION OF THE DRAWINGS

The above and other objects, features, and other advantages of the present disclosure will be more clearly understood from the following detailed description taken in conjunction with the accompanying drawings, in which:
FIG. 1 is a perspective view of a pet care device according to an embodiment of the present disclosure;
FIG. 2 is a perspective view of a pad, a base, and a weight sensing element according to the embodiment of the present disclosure;
FIG. 3 is a bottom view of the pad according to the embodiment of the present disclosure;
FIG. 4 is an exploded perspective view of the base and a pogo pin module according to the embodiment of the present disclosure;
FIG. 5 is an enlarged view of FIG. 4;
FIG. 6 is an enlarged view of the base and the pogo pin module according to the embodiment of the present disclosure;
FIG. 7 is a cutaway perspective view of the base and the pogo pin module according to the embodiment of the present disclosure;
FIG. 8 is a bottom view of an upper plate, a first PCB, and a first PCB frame according to the embodiment of the present disclosure;
FIG. 9 is an exploded perspective view of an upper base and a lower base according to the embodiment of the present disclosure;
FIG. 10 is a cutaway perspective view showing the pet care device according to the embodiment of the present disclosure before the pad is placed above the base; and
FIG. 11 is a cutaway perspective view showing the pet care device according to the embodiment of the present disclosure in the state in which the pad is placed above the base.

### DETAILED DESCRIPTION

Hereinafter, the embodiments disclosed in the present specification will be described in detail with reference to the accompanying drawings, and the same or similar elements are denoted by the same reference numerals even though they are depicted in different drawings, and redundant descriptions thereof will be omitted.

The suffixes "module" and "unit" for constituent elements used in the following description are given or used interchangeably only for ease of description of the specification, and do not have mutually distinguished meanings or roles in themselves.

In the following description of the embodiments disclosed in the present specification, a detailed description of known functions and configurations incorporated herein will be omitted when the same may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents, and substitutions within the scope and sprit of the present disclosure.

It will be understood that although the terms "first", "second", etc., may be used herein to describe various components, these components should not be limited by these terms. These terms are only used to distinguish one component from another component.

It will be understood that when a component is referred to as being "connected to" or "coupled to" another component, it may be directly connected to or coupled to the other component, or intervening components may be present. On the other hand, when a component is referred to as being "directly connected to" or "directly coupled to" another component, there are no intervening components present.

As used herein, the singular form is intended to include the plural forms as well, unless the context clearly indicates otherwise.

It will be further understood that the term "comprise" or "include", when used herein, specifies the presence of stated features, integers, steps, operations, elements, components, or combinations thereof, but does not preclude the presence or addition of one or more other features, integers, steps, operations, elements, components, or combinations thereof.

Representations of directions illustrated in the drawings, such as up (U), down (D), left (Le), right (Ri), front (F), and rear (R), are merely for convenience of explanation, and are not intended to limit the technical features disclosed in this specification.

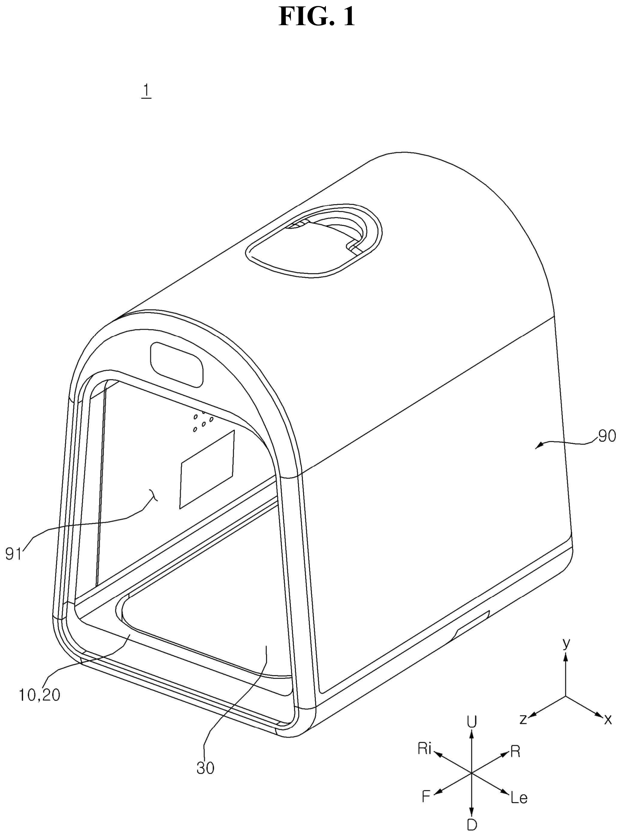

A pet care device 1 according to an embodiment of the present disclosure will be described with reference to FIG. 1.

The pet care device 1 includes bases 10 and 20 disposed on a predetermined ground and a pad 30 on which a pet is capable of being placed.

In the case in which the pet care device 1 is a pet house 1, the pet care device 1 may include a pet house cover 90. In addition to the pet house 1, the pet care device 1 may include a device capable of sensing a pet's health conditions, a device in which a pet is capable of comfortably living, a pet carrier, and the like.

The bases 10 and 20 and the pet house cover 90 may be collectively referred to as a housing 10, 20, and 90. An inner space 91 of the pet care device 1 may be defined between the bases 10 and 20 and the pet house cover 90. The housing 10, 20, and 90 may define the inner space 91 that is open forwardly. A pet such as a dog or a cat may enter or exit the inner space 91 through the opening of the pet care device 1.

The bases 10 and 20 may form the bottom of the pet care device 1. The bases 10 and 20 may have a rectangular plate shape. Alternatively, the bases 10 and 20 may have various other shapes such as a disc shape. The bases 10 and 20 may be referred to as bottom parts 10 and 20, lower parts 10 and 20, or floors 10 and 20.

The pad 30 may be disposed above the bases 10 and 20. The pad 30 may be a rectangular pad 30. Alternatively, the pad 30 may have various other shapes such as a circular, elliptical, or polygonal shape. The pad 30 may be disposed above the bases 10 and 20, and a pet may be placed on the pad 30.

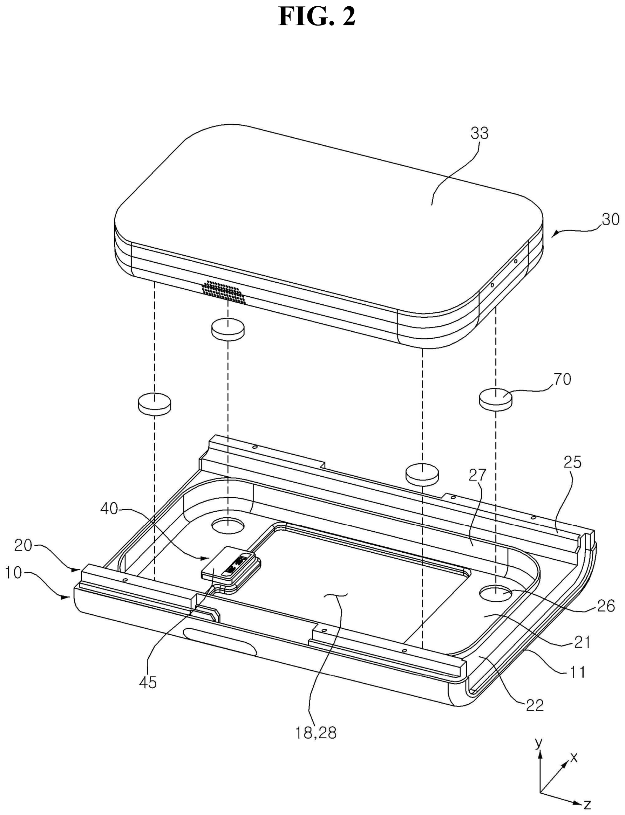

The pad 30, a weight sensing element 70, and the bases 10 and 20 according to the embodiment of the present disclosure will be described with reference to FIG. 2.

The pad 30 may be referred to as a smart pad 30. The pad 30 may sense various biometric information of the pet. The pad 30 may include a weight sensing element 70. The weight sensing element 70 may be disposed between the pad 30 and the base 20. In addition, the pad 30 may include a heat transfer sheet (not shown) and a temperature sensor (not shown).

The weight sensing element 70 may be a load cell that senses a weight by changing an electrical signal according to the degree of compression. The weight sensing element 70 may be mounted to the pad 30 or may be mounted to the bases 10 and 20. The weight sensing element 70 may be disposed between the pad 30 and an upper plate 21 of an upper base 20 among the bases 10 and 20.

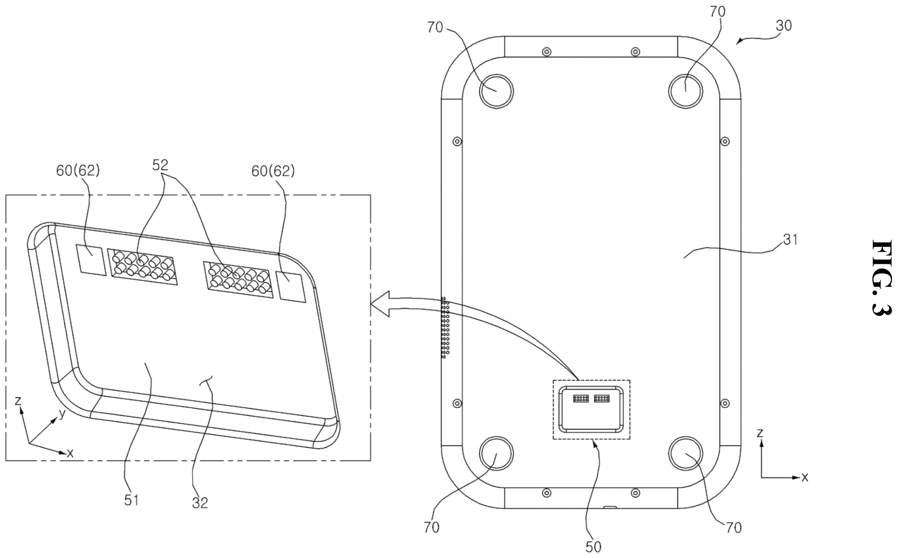

The weight sensing element 70 may be provided in plural, and the plurality of weight sensing elements 70 may be mounted on a lower surface 31 (refer to FIG. 3) of the pad 30. The weight sensing elements 70 may be mounted on corners of the lower surface 31 of the pad 30. The weight sensing element 70 mounted on the lower surface 31 of the pad 30 may protrude downward from the lower surface 31 of the pad 30. Accordingly, when the pad 30 is placed on the ground, the lower surface 31 of the pad 30 may be spaced apart from the ground by the degree to which the weight sensing element 70 protrudes.

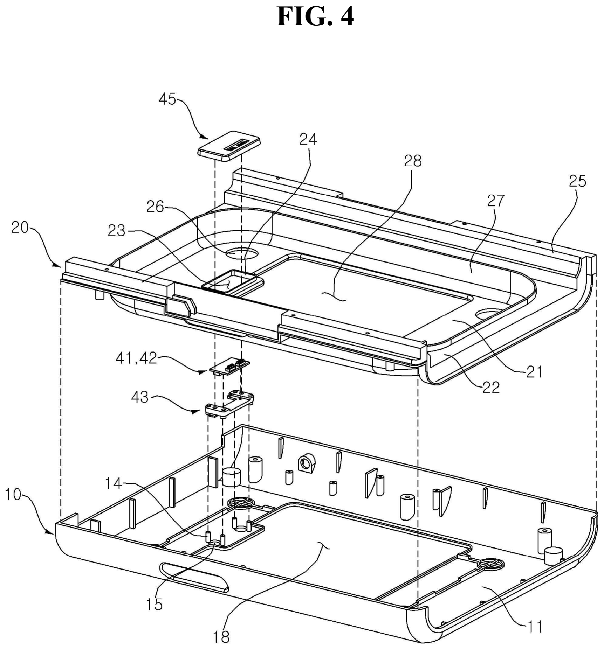

Referring to FIGs. 2 and 4, the bases 10 and 20 may include a lower base 10 and an upper base 20. The lower base 10 may form the bottom of the bases 10 and 20, and the upper base 20 may be coupled to the lower base 10 to form the top of the bases 10 and 20. The lower base 10 may include a lower plate 11 forming the bottom wall of the lower base 10. The upper base 20 may include an upper plate 21 forming the bottom wall of the upper base 20.

At least a portion of the edge forming the long side of the upper base 20 may protrude upward to form a house cover coupling portion 25 that is coupled to the pet house cover 90.

The central portions of the lower plate 11 and the upper plate 21 may be cut out to form cavities 18 and 28. The cavities 18 and 28 formed in the lower plate 11 and the upper plate 21 may communicate with each other. The cavities 18 and 28 may have a rectangular shape. Alternatively, the cavities 18 and 28 may have various other shapes such as a circular, elliptical, or polygonal shape.

The cavities 18 and 28 may be formed in areas, except an area in which an opening 23 to be described later is formed and an area located below the opening 23, so as to be adjacent to the opening 23 and the area located below the opening 23.

The cavities 18 and 28 may drain a fluid such as urine discharged from a pet placed on the pad 30. The cavities 18 and 28 may perform a heat dissipation function to cool the pad 30 disposed thereon.

The upper plate 21 may include a sidewall 27 protruding upward from the edges forming the long sides and the short sides of the upper plate 21. The pad 30 may be disposed in an inner space in the upper base 20 surrounded by the sidewall 27. The sidewall 27 may protrude to a height equivalent to the thickness of the pad 30. When the pad 30 is disposed in the inner space in the upper base 20, the upper surface 33 of the pad 30 and the upper surface 22 of the upper base 20 may be disposed on the same plane or may be disposed with a slight step formed therebetween. When the pet placed on the pad 30 discharges a bodily fluid, the bodily fluid may flow to the cavities 18 and 28 along the sidewall 27 and may then be drained.

The upper plate 21 may have a seating recess 26 formed in an area corresponding to the weight sensing element 70 mounted to the pad 30. The depth of the seating recess 26 may be less than the thickness of the weight sensing element 70. Accordingly, when the pad 30 is disposed above the bases 10 and 20, the weight sensing element 70 may support the pad 30, and the pad 30 may be spaced upward from the upper plate 21.

The upper plate 21 may have an opening 23 formed therein. The opening 23 may be formed adjacent to the cavities 18 and 28 and may or may not communicate with the cavities 18 or 28.

A pogo pin module 40 may be disposed at least inside and/or below the opening 23. The pogo pin module 40 may include a first printed circuit board (PCB) 41 and a pogo pin 42. The pogo pin module 40 may be disposed so as to be movable upward and downward between the bases 10 and 20 and the pad 30. Unlike the embodiment, a connection terminal module 50 (refer to FIG. 3) may be disposed so as to be movable upward and downward between the bases 10 and 20 and the pad 30.

A first PCB cover 45 may be disposed above the opening 23. The first PCB cover 45 may protrude upward above the upper plate 21. Accordingly, the first PCB cover 45 may guide the pad 30 to be disposed above the bases 10 and 20.

The lower surface 31 of the pad 30 will be described in more detail with reference to FIG. 3.

The pad 30 may be equipped with a connection terminal module 50. The connection terminal module 50 may include a second PCB 51 and a connection terminal 52 electrically connected to the pogo pin 42. Unlike the embodiment, the pogo pin module 40 may be mounted to the pad 30.

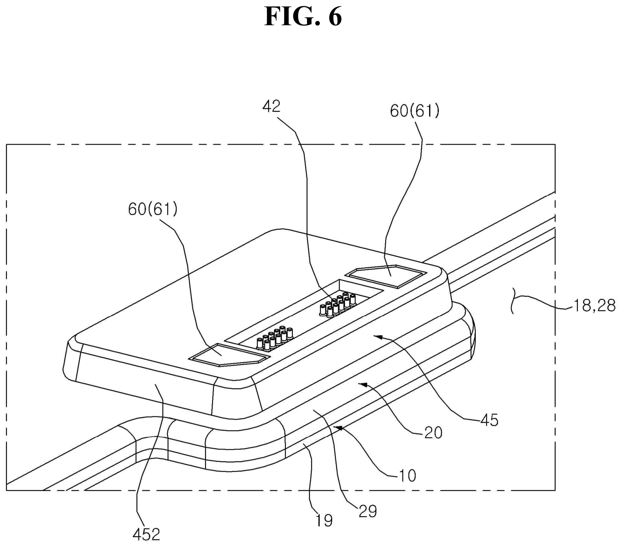

Referring to FIGs. 3 and 6, a magnet 60 may be mounted to at least one of the pogo pin module 40 or the connection terminal module 50. A first magnet 61 may be mounted to one of the pogo pin module 40 and the connection terminal module 50, and a second magnet 62 having a polarity opposite that of the first magnet 61 may be mounted to the other of the pogo pin module 40 and the connection terminal module 50.

Referring to FIG. 3, the connection terminal module 50 may be mounted on the lower surface 31 of the pad 30. The connection terminal module 50 may be mounted above an area corresponding to the pogo pin module 40.

The lower surface 31 of the pad 30 may have a depressed portion 32 formed therein so as to be depressed upward. The depressed portion 32 may be formed corresponding to the shape of the first PCB cover 45. The connection terminal module 50 may be mounted to an inner upper side of the depressed portion 32.

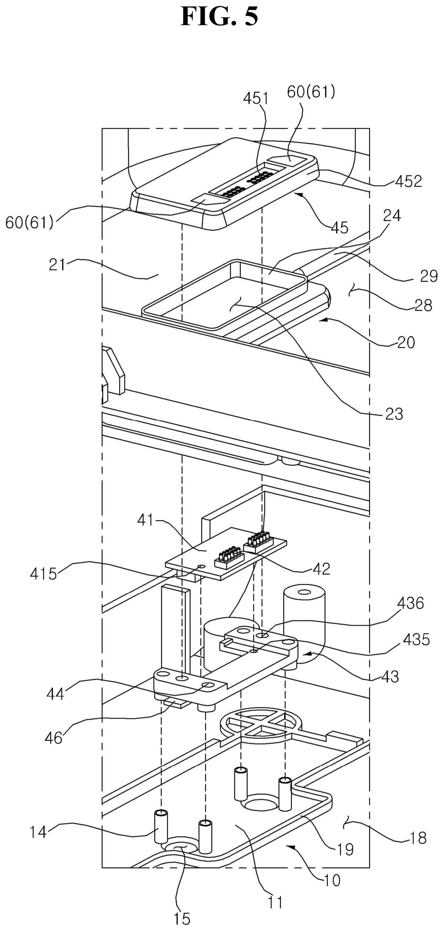

The bases 10 and 20 and the pogo pin module 40 will be described in more detail with reference to FIGs. 4 and 5.

The bases 10 and 20 may include a guide rod 14 protruding upward therefrom so as to guide upward/downward movement of the pogo pin module 40. The guide rod 14 may be formed on the lower plate 11 of the lower base 10. The guide rod 14 may have a cylindrical shape. Alternatively, the guide rod 14 may have an elliptical pillar shape or a polygonal pillar shape such as a rectangular pillar shape.

The guide rod 14 formed on the lower plate 11 may pass through the opening 23 formed in the upper plate 21 or may protrude to the inside of the opening 23 or a region below the opening 23. The pogo pin module 40 may have a guide hole 44 formed therein, and the guide rod 14 may be fitted into the guide hole 44. The guide rod 14 may be fitted into the guide hole 44 to guide upward/downward movement of the pogo pin module 40. Two or more guide rods 14 may be formed so as to be spaced apart from each other.

The lower plate 11 may have a drain hole 15 formed therein. The drain hole 15 may drain a fluid introduced thereinto through the opening 23. The drain hole 15 may be formed in an area corresponding to the opening 23. The drain hole 15 may be formed between the guide rods 14. The drain hole 15 may be provided in plural.

The lower plate 11 may include an upwardly bent portion 19 formed so as to be bent upwardly from the edge thereof. The upwardly bent portion 19 may also be formed on the edge of the cavity 18. The upper plate 21 may include a downwardly bent portion 29 formed so as to be bent downwardly from the edge thereof. The downwardly bent portion 29 may be in contact with the upwardly bent portion 19.

The pogo pin module 40 may include a first PCB 41 and a pogo pin 42. The pogo pin module 40 may be disposed so as to be movable upward and downward between the bases 10 and 20 and the pad 30.

The first PCB 41 may be coupled to the pogo pin 42. External power may be applied to the first PCB 41. Upon receiving power, the first PCB 41 may supply current to the pogo pin 42.

The pogo pin 42 may be electrically connected to the connection terminal 52 of the pad 30 to supply power or transmit a signal to the connection terminal 52. The pogo pin 42 may be coupled to an upper portion of the first PCB 41. The pogo pin 42 coupled to the first PCB 41 may protrude upward.

The pogo pin module 40 may include a first PCB frame 43 that supports the first PCB 41. The first PCB frame 43 may be coupled to a lower side of the first PCB 41. The first PCB 41 may have a first fastening hole 415 formed in an area in which the pogo pin 42 is not disposed, and the first PCB frame 43 may have a second fastening hole 435 formed in a portion corresponding to the first fastening hole 415. The first and second fastening holes 415 and 435 may communicate with each other. A set screw (not shown) may be fastened into the first and second fastening holes 415 and 435 to couple the first PCB 41 and the first PCB frame 43 to each other.

The guide hole 44 may be formed in the first PCB frame 43. The guide hole 44 may be provided in plural, and the plurality of guide holes 44 may be formed on both sides of a portion to which the first PCB 41 is coupled. The guide hole 44 may be formed at a position vertically aligned with the position at which the guide rod 14 is formed. The guide hole 44 may have a circular shape. Alternatively, the guide hole 44 may have an elliptical or polygonal shape. Alternatively, the guide hole 44 may be formed in a shape corresponding to the shape of the guide rod 14.

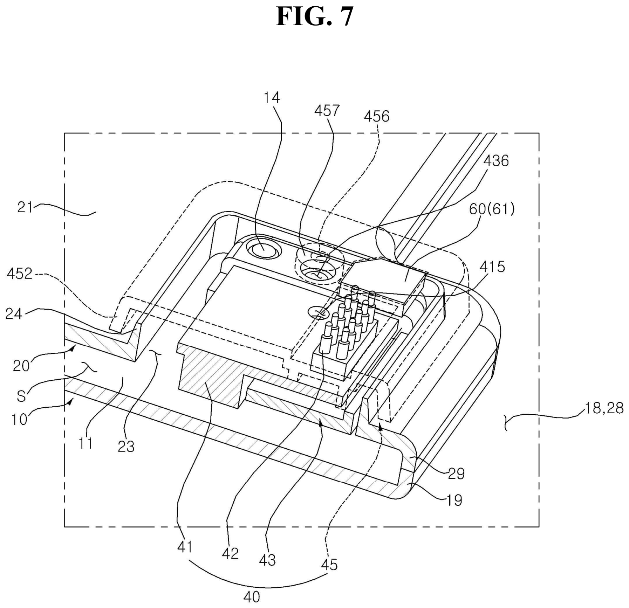

The first PCB frame 43 may have a third fastening hole 436 formed therein. The third fastening hole 436 may communicate with a fourth fastening hole 456 (refer to FIG. 7) formed in the first PCB cover, and a set screw may be fastened into the third and fourth fastening holes to couple the first PCB frame 43 and the first PCB cover 45 to each other.

The opening 23 may be formed in the upper base 20 so as to allow the guide rod 14 to pass therethrough. The opening 23 may be formed to a size allowing the pogo pin module 40 to pass therethrough.

The upper plate 21 may include a fence 24 protruding upward from the periphery of the opening 23. The fence 24 may serve to prevent fluid discharged from the pet from entering the opening 23.

The upper plate 21 may include a downwardly bent portion 29 formed so as to be bent downwardly from the edge thereof. The downwardly bent portion 29 may also be formed along the periphery of the cavity 28.

The pogo pin module 40 may include a first PCB cover 45 that covers the upper surface of the first PCB 41. The first PCB cover 45 may have a pin hole 451 formed therein so as to allow the pogo pin 42 to pass therethrough. The first PCB cover 45 may be disposed above the opening 23.

The first PCB cover 45 may be equipped with a magnet 60. The magnet 60 may be provided in plural, and the plurality of magnets 60 may be mounted on both sides of the pin hole 451 so as to be spaced apart from each other or may be mounted around the pin hole 451. Alternatively, the first PCB cover 45 may be equipped with a magnetic body.

The first PCB cover 45 may include a downward peripheral portion 452 bent downwardly from the edge thereof. The downward peripheral portion 452 may be formed so as to surround the outer surface of the fence 24.

The first PCB cover 45 may include a second fastening boss 457 (refer to FIG. 7) formed on the lower surface thereof. The second fastening boss 457 may protrude downward from the lower surface of the first PCB cover 45 and may have a fourth fastening hole 456 formed therein. The fourth fastening hole 456 may not penetrate the first PCB cover 45.

The first PCB frame 43 may be coupled to the lower base 10 by fitting the guide rod 14 into the guide hole 44. Thereafter, the first PCB 41 may be coupled to an upper portion of the first PCB frame 43 through the first and second fastening holes 415 and 435. Thereafter, the upper base 20 may be mounted on and coupled to the lower base 10. Thereafter, the first PCB cover 45 may be coupled to the first PCB frame 43 above the upper plate 21 through the third and fourth fastening holes 436 and 456.

The pogo pin module and the base will be described in more detail with reference to FIGs. 6 and 7.

When the first PCB cover 45 is coupled to an upper side of the pogo pin 42, the pogo pin 42 may pass through the pin hole 451 to protrude above the first PCB cover 45. The downward peripheral portion 452 of the first PCB cover 45 may be formed in contact with the upper surface of the upper plate 21.

The upwardly bent portion 19 of the lower plate 11 and the downwardly bent portion 29 of the upper plate 21 may be coupled vertically to each other to define a space S between the upper and lower plates 21 and 11. Accordingly, the space S in which the pogo pin module 40 is capable of moving vertically between the bases 10 and 20 and the pad 30 may be defined. At least a portion of the pogo pin module 40 may be disposed in the space S.

An end portion of the fence 24 may be formed so as to be in contact with the lower surface of the first PCB cover 45. At least a portion of the pogo pin module 40 may be disposed in the opening 23 surrounded by the fence 24.

The first PCB 41 and the first PCB frame 43 may be disposed so as to be spaced apart from the inner wall of the fence 24.

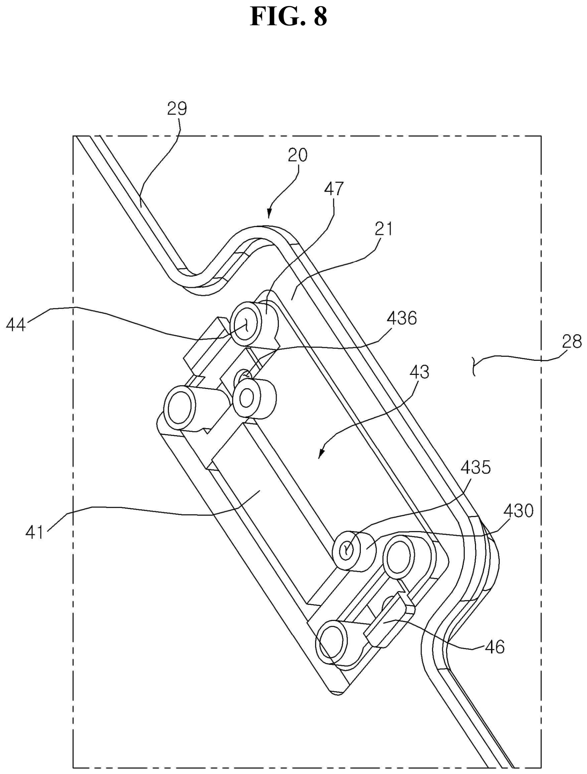

The upper plate, the first PCB, and the first PCB frame will be described in more detail with reference to FIG. 8.

The first PCB frame 43 may include a stopper 46. The stopper 46 may be formed so as to protrude outside the first PCB 41. The stopper 46 may protrude so as to be contactable with the lower surface of the upper plate 21 below the opening 23. The stopper 46 may serve to prevent the pogo pin module 40 from being separated above the opening 23.

The first PCB frame 43 may include a guide boss 47 formed on the lower surface thereof so as to protrude downward. The guide hole 44 may be formed in the guide boss 47. The guide boss 47 may protrude so as to prevent the lower surface of the first PCB 41 from contacting the lower plate 11.

The first PCB frame 43 may include a first fastening boss 430 formed on the lower surface thereof so as to protrude downward. The first fastening boss 430 may be formed in an area corresponding to the first fastening hole 415 in the first PCB 41. The second fastening hole 435 may be formed in the first fastening boss 430. The first PCB 41 and the first PCB frame 43 may be coupled to each other through the first and second fastening holes 415 and 435.

The first PCB frame 43 may have a third fastening hole 436 formed in an area corresponding to the fourth fastening hole 456 in the first PCB cover 45. The third and fourth fastening holes 436 and 456 may communicate with each other. The first PCB frame 43 and the first PCB cover 45 may be coupled to each other through the third and fourth fastening holes 436 and 456.

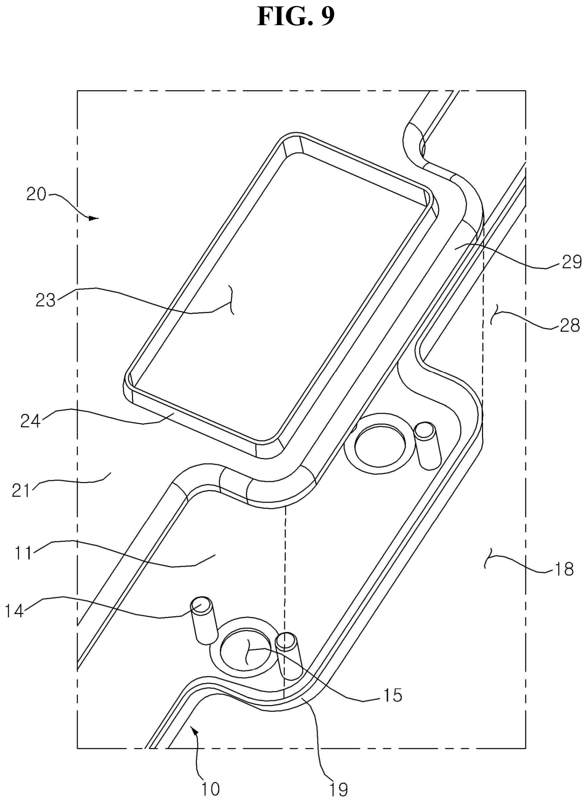

The drain hole in the lower base will be described in more detail with reference to FIG. 9.

The drain hole 15 may be formed in the lower plate 11 so as to be located below the opening 23. The drain hole 15 may drain the pet's bodily fluid flowing thereinto through the opening 23. The drain hole 15 may form a bellmouth extending downward.

The drain hole 15 may communicate with the third and fourth fastening holes 436 and 456 in the first PCB frame 43 and the first PCB cover 45. Accordingly, a process of coupling the first PCB frame 43 and the first PCB cover 45 to each other may be performed below the lower plate 11.

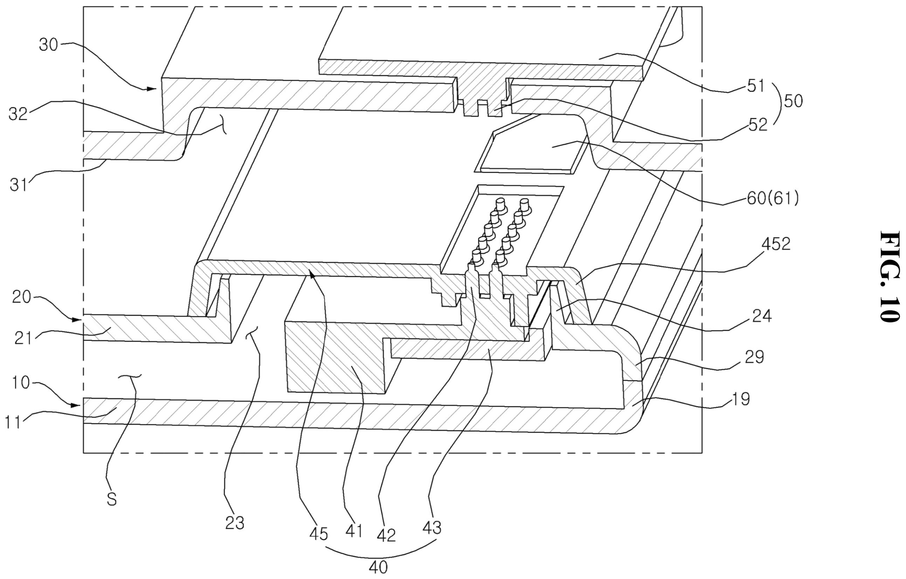

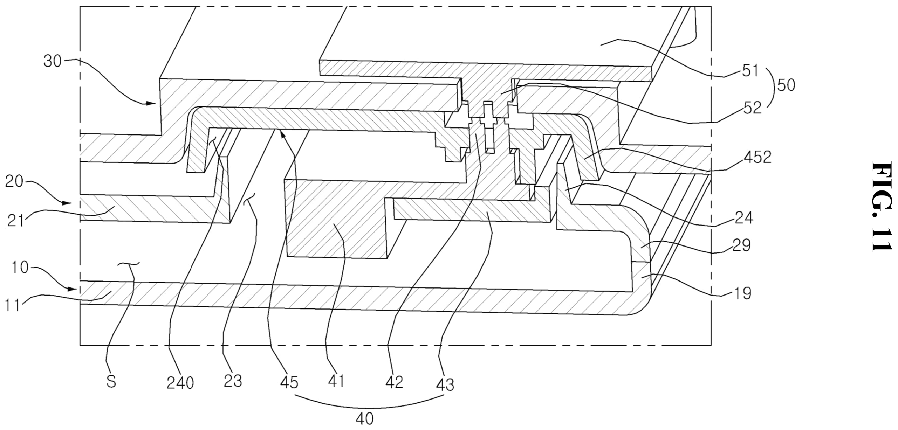

The upward/downward movement of the pogo pin module between the bases and the pad will be described in detail with reference to FIGs. 10 and 11.

FIG. 10 is a view showing a state before the pad is placed above the bases, and FIG. 11 is a view showing a state in which the pad is placed above the bases.

Before the pad 30 is placed above the bases 10 and 20, the downward peripheral portion 452 of the first PCB cover 45 may be in contact with the upper plate 21. The protruding portion of the fence 24 may be in contact with the lower surface of the first PCB cover 45. Accordingly, the pogo pin module 40 may be spaced upward from the lower plate 11. In this case, the stopper 46 formed at the first PCB frame 43 may be spaced apart from the lower surface of the upper plate 21.

When a fluid falls onto the bases 10 and 20, the downward peripheral portion 452 may primarily prevent the fluid from flowing into the opening 23. Secondarily, the fence 24 may prevent the fluid from flowing into the opening 23. If the fluid flows into the opening 23, the fluid may be drained through the drain hole 15.

Because the pogo pin module 40 is spaced upward from the lower plate 11 and the first PCB 41 and the first PCB frame 43 are spaced apart from the inner wall of the fence 24, the first PCB 41 and the pogo pin 42 may be protected from the fluid discharged from the pet.

When the pad 30 is placed above the bases 10 and 20, the pogo pin module 40 may move upward to be electrically connected to the connection terminal module 50 due to the magnetic force of the magnet 60 mounted to at least one of the pogo pin module 40 or the connection terminal module 50.

The pogo pin module 40 may be electrically connected to the connection terminal 52 by inserting at least the pogo pin 42 into the depressed portion 32 of the pad 30. In this case, the stopper 46 formed at the first PCB frame 43 may be in contact with the lower surface of the upper plate 21.

When the pad 30 is placed above the bases 10 and 20, the lower surface 31 of the pad 30 may be spaced apart from the upper plate 21 due to the weight sensing element 70. The pogo pin module 40 that has moved upward to be connected to the connection terminal module 50 may be spaced apart from the upper and lower plates 21 and 11. Accordingly, although the pet is placed on the pad 30, the load may be transferred only to the weight sensing element 70. As a result, the accuracy of weight measurement may be increased.

When the pad 30 is placed above the bases 10 and 20, the first PCB cover 45 may be spaced upward from the upper plate 21, and thus a drain channel 240 may be formed between the first PCB cover 45 and the upper plate 21. The drain channel 240 may be formed between the first PCB cover 45 and the fence 24.

When the pet placed on the pad 30 discharges a fluid, a portion of the fluid may be primarily drained through the cavities 18 and 28, and the remaining portion of the fluid may flow to the lower plate 11 through the drain channel 240 and may be finally drained through the drain hole 15. Because the pogo pin module 40 is spaced upward from the lower plate 11 and the first PCB 41 and the first PCB frame 43 are spaced apart from the inner wall of the fence 24, the first PCB 41 and the pogo pin 42 may be protected from the fluid discharged from the pet.

When the pad 30 disposed above the bases 10 and 20 is separated upwardly from the bases 10 and 20, the stopper 46 of the first PCB frame 43 may come into contact with the lower surface of the upper plate 21, thereby preventing the pogo pin module 40 from being separated above the opening 23. As the pad 30 is separated far away, the magnetic force acting between the pogo pin module 40 and the connection terminal module 50 may be weakened, and thus the electrical connection between the pogo pin module 40 and the connection terminal module 50 may be released. Accordingly, the pogo pin module 40 may move downward to come into contact with the upper plate 21.

Referring to FIGs. 1 to 11, a pet care device 1 may include bases 10 and 20, a pad 30 disposed above the bases 10 and 20, a pogo pin module 40 including a first PCB 41 and a pogo pin 42, and a connection terminal module 50 mounted to the pad 30 and including a second PCB 51 and a connection terminal 52 electrically connected to the pogo pin 42. The pogo pin module 40 may be movably disposed between the bases 10 and 20 and the pad 30 in an upward and downward direction, and a magnet 60 may be mounted to at least one of the pogo pin module 40 and the connection terminal module 50 such that the pogo pin module 40 may be moved upward by a magnetic force of the magnet 60 and comes into electrical connection with the connection terminal module 50.

The bases 10 and 20 may include a guide rod 14 protruding upward from the base 10, 20, and the pogo pin module 40 may include a guide hole 44 formed in the pogo pin module 40, the guide rod 14 being fitted into the guide hole 44 to guide upward and downward movement of the pogo pin module 40.

The bases 10 and 20 may include a lower base 10 including a lower plate 11 and an upper base 20 including an upper plate 21 mounted on the lower base 10.

The guide rod 14 may be formed on the lower plate 11, and the upper plate 21 may include an opening 23 so as to allow the guide rod 14 to pass through the opening 23.

The opening 23 may be formed to a size that allows the pogo pin module 40 to pass through the opening 23.

The upper plate 21 may include a fence 24 protruding upward from an upper surface of the upper plate 21 along the periphery of the opening 23.

The pad 30 may include a depressed portion 32 depressed upward from a lower surface 31 of the pad 30, and the connection terminal module 50 may be mounted to an upper side of the depressed portion 32.

The pogo pin module 40 may be electrically connected to the connection terminal 52 by inserting at least the pogo pin 42 into the depressed portion 32.

The pogo pin module 40 may include a first PCB frame 43 supporting the first PCB 41, and the guide hole 44 may be formed in the first PCB frame 43.

The pogo pin module 40 may include a first PCB cover 45 covering an upper surface of the first PCB 41, the first PCB cover 45 may comprise a pin hole 451 through which the pogo pin 42 passes, the magnet 60 may be mounted to the first PCB cover 45, and the first PCB cover 45 may be disposed above the opening 23.

The first PCB cover 45 may include a downward peripheral portion 452 bent downwardly from an edge of the first PCB cover 45, and the downward peripheral portion 452 may surround an outer surface of the fence 24.

The first PCB frame 43 may include a stopper 46, and the stopper 46 may be disposed below the opening 23 and may protrude in a direction away from the first PCB 41 and may be configured to come into contact with a lower surface of the upper plate 21.

The lower plate 11 may include a drain hole 15 disposed below the opening 23.

The upper plate 21 and the lower plate 11 may include cavities 18 and 28 formed in central portions thereof.

The upper base 20 may include a sidewall 27 protruding upward from an edge of the upper plate 21, the pad 30 may be disposed in an inner space in the upper base 20 surrounded by the sidewall 27, and at least one weight sensing element 70 may be disposed between the upper plate 21 and the pad 30.

A pet care device 1 may include bases 10 and 20, a pad 30 disposed above the bases 10 and 20, a pogo pin module 40 configured to receive external power and including a first PCB 41 and a pogo pin 42, and a connection terminal module 50 mounted to the pad 30 and including a connection terminal 52 electrically connected to the pogo pin 42. The pogo pin module 40 may be movably disposed between the bases 10 and 20 and the pad 30 in an upward and downward direction, and one or more weight sensing elements 70 may be disposed between the bases 10 and 20 and the pad 30.

The bases 10 and 20 may include a lower base 10 including a lower plate 11 and an upper base 20 including an upper plate 21, the pogo pin module 40 may be disposed between the lower plate 11 and the pad 30, the weight sensing elements 70 may be disposed between the upper plate 21 and the pad 30, and the upper plate 21 may include an opening 23 so as to allow the pogo pin module 40 to pass through the opening 23.

The lower plate 11 may include a guide rod 14 protruding upward from the lower plate 11, and the pogo pin module 40 may include a guide hole 44 formed in the pogo pin module 40, the guide rod 14 being fitted into the guide hole 44 to guide upward and downward movement of the pogo pin module 40.

A first magnet 61 may be mounted to one of the pogo pin module 40 and the connection terminal module 50, and a magnetic body or a second magnet 62 having a polarity opposite the polarity of the first magnet 61 may be mounted to the other of the pogo pin module 40 and the connection terminal module 50.

A pet care device 1 may include bases 10 and 20, a pad 30 disposed above the bases 10 and 20, a pogo pin module 40 configured to receive external power and including a first PCB 41 and a pogo pin 42, and a connection terminal module 50 mounted to the pad 30 and including a second PCB 51 and a connection terminal 52 electrically connected to the pogo pin 42. The pogo pin module 40 may be movably disposed between the bases 10 and 20 and the pad 30 in an upward and downward direction, the bases 10 and 20 may include a guide rod 14 protruding upward from the base 10, 20, and the pogo pin module 40 may include a guide hole 44 formed in the pogo pin module 40, the guide rod 14 being fitted into the guide hole 44.

As is apparent from the above description, a pet care device including a base and a pad according to the present disclosure has the following effects.

According to at least one of the embodiments of the present disclosure, a pogo pin module may move upward and downward between the base and the pad.

According to at least one of the embodiments of the present disclosure, when the pad is placed above the base, the pogo pin module may be electrically connected to a connection terminal of the pad due to the magnetic force of a magnet.

According to at least one of the embodiments of the present disclosure, when the pad is placed above the base, the pogo pin module may move upward to be spaced apart from upper and lower plates of the base, and thus the influence on measurement of the weight of the pet through a weight sensing element may be eliminated.

According to at least one of the embodiments of the present disclosure, because the pogo pin module has a guide hole formed therein so as to allow a guide rod to be fitted thereinto, the pogo pin module may stably move upward and downward.

According to at least one of the embodiments of the present disclosure, a first PCB frame may include a stopper protruding outside a first PCB, and the stopper may be in contact with the lower surface of the upper plate of the base, thereby preventing the pogo pin module from being completely separated above the base.

According to at least one of the embodiments of the present disclosure, because a drain hole is formed in the lower plate, when the pad is disposed above the base, the pogo pin module may move upward, thereby draining a fluid such as a pet's bodily fluid without damage to internal components of the base.

According to at least one of the embodiments of the present disclosure, the central portions of the upper and lower plates may be cut out to form cavities, thereby immediately draining a fluid such as a pet's bodily fluid.

The effects achievable through the disclosure are not limited to the above-mentioned effects, and other effects not mentioned herein will be clearly understood by those skilled in the art from the description of the claims.

## Claims

1. A pet care device (1) comprising:
a base (10, 20);
a pad (30) disposed above the base (10, 20);
a pogo pin module (40) comprising a first PCB (41) and a pogo pin (42); and
a connection terminal module (50) mounted to the pad (30), the connection terminal module (50) comprising a second PCB (51) and a connection terminal (52) electrically connected to the pogo pin (42),
wherein the pogo pin module (40) is movably disposed between the base (10, 20) and the pad (30) in an upward and downward direction, and
wherein a magnet (60) is mounted to at least one of the pogo pin module (40) and the connection terminal module (50) such that the pogo pin module (40) is moved upward by a magnetic force of the magnet (60) and comes into electrical connection with the connection terminal module (50).

2. The pet care device (1) according to claim 1, wherein the base (10, 20) comprises a guide rod (14) protruding upward from the base (10, 20), and
wherein the pogo pin module (40) comprises a guide hole (44) formed in the pogo pin module (40), the guide rod (14) being fitted into the guide hole (44) to guide upward and downward movement of the pogo pin module (40).

3. The pet care device (1) according to claim 1 or 2, wherein the base (10, 20) comprises:
a lower base (10) comprising a lower plate (11); and
an upper base (20) comprising an upper plate (21) mounted on the lower base (10).

4. The pet care device (1) according to claim 3, wherein the guide rod (14) is formed on the lower plate (11), and wherein the upper plate (21) comprises an opening (23) so as to allow the guide rod (14) to pass through the opening (23).

5. The pet care device (1) according to claim 4, wherein the opening (23) is formed to a size that allows the pogo pin module (40) to pass through the opening (23).

6. The pet care device (1) according to claim 5, wherein the upper plate (21) comprises a fence (24) protruding upward from an upper surface of the upper plate (21) along a periphery of the opening (23).

7. The pet care device (1) according to any one of claims 1 to 6, wherein the pad (30) comprises a depressed portion (32) depressed upward from a lower surface (31) of the pad (30), and
wherein the connection terminal module (50) is mounted to an upper side of the depressed portion (32).

8. The pet care device (1) according to claim 7, wherein the pogo pin module (40) is electrically connected to the connection terminal (52) by inserting at least the pogo pin (42) into the depressed portion (32).

9. The pet care device (1) according to any one of claims 5 to 8, wherein the pogo pin module (40) comprises a first PCB frame (43) supporting the first PCB (41), and wherein the guide hole (44) is formed in the first PCB frame (43).

10. The pet care device (1) according to claim 6, wherein the pogo pin module (40) comprises a first PCB cover (45) covering an upper surface of the first PCB (41), the first PCB cover (45) comprises a pin hole (451) through which the pogo pin (42) passes,
wherein the magnet (60) is mounted to the first PCB cover (45), and
wherein the first PCB cover (45) is disposed above the opening (23).

11. The pet care device (1) according to claim 10, wherein the first PCB cover (45) comprises a downward peripheral portion (452) bent downwardly from an edge of the first PCB cover (45), and wherein the downward peripheral portion (452) surrounds an outer surface of the fence (24).

12. The pet care device (1) according to claim 9, wherein the first PCB frame (43) comprises a stopper (46), and
wherein the stopper (46) is disposed below the opening (23) and protrudes in a direction away from the first PCB (41) and is configured to come into contact with a lower surface of the upper plate (21).

13. The pet care device (1) according to any one of claims 5 to 12, wherein the lower plate (11) comprises a drain hole (15) disposed below the opening (23).

14. The pet care device (1) according to any one of claims 5 to 13, wherein each of the upper plate (21) and the lower plate (11) comprises a cavity (18, 28) formed in a central portion thereof.

15. The pet care device (1) according to any one of claims 3 to 14, wherein the upper base (20) comprises a sidewall (27) protruding upward from an edge of the upper plate (21),
wherein the pad (30) is disposed in an inner space in the upper base (20) surrounded by the sidewall (27), and
wherein at least one weight sensing element (70) is disposed between the upper plate (21) and the pad (30).

16. A pet care device (1) comprising:
a base (10, 20);
a pad (30) disposed above the base (10, 20);
a pogo pin module (40) configured to receive external power, the pogo pin module (40) comprising a first PCB (41) and a pogo pin (42); and
a connection terminal module (50) mounted to the pad (30), the connection terminal module (50) comprising a connection terminal (52) electrically connected to the pogo pin (42),
wherein the pogo pin module (40) is movably disposed between the base (10, 20) and the pad (30) in an upward and downward direction, and
wherein one or more weight sensing elements (70) are disposed between the base (10, 20) and the pad (30).

17. The pet care device (1) according to claim 16, wherein the base (10, 20) comprises:
a lower base (10) comprising a lower plate (11); and
an upper base (20) comprising an upper plate (21),
wherein the pogo pin module (40) is disposed between the lower plate (11) and the pad (30),
wherein the weight sensing elements (70) are disposed between the upper plate (21) and the pad (30), and
wherein the upper plate (21) comprises an opening (23) so as to allow the pogo pin module (40) to pass through the opening (23).

18. The pet care device (1) according to claim 17, wherein the lower plate (11) comprises a guide rod (14) protruding upward from the lower plate (11), and
wherein the pogo pin module (40) comprises a guide hole (44) formed in the pogo pin module (40), the guide rod (14) being fitted into the guide hole (44) to guide upward and downward movement of the pogo pin module (40).

19. The pet care device (1) according to claim 16, wherein a first magnet (61) is mounted to one of the pogo pin module (40) and the connection terminal module (50), and a magnetic body or a second magnet (62) having a polarity opposite a polarity of the first magnet (61) is mounted to the other one of the pogo pin module (40) and the connection terminal module (50).

20. A pet care device (1) comprising:
a base (10, 20);
a pad (30) disposed above the base (10, 20);
a pogo pin module (40) configured to receive external power, the pogo pin module (40) comprising a first PCB (41) and a pogo pin (42); and
a connection terminal module (50) mounted to the pad (30), the connection terminal module (50) comprising a connection terminal (52) electrically connected to the pogo pin (42),
wherein the pogo pin module (40) is movably disposed between the base (10, 20) and the pad (30) in an upward and downward direction,
wherein the base (10, 20) comprises a guide rod (14) protruding upward from the base (10, 20), and
wherein the pogo pin module (40) comprises a guide hole (44) formed in the pogo pin module (40), the guide rod (14) being fitted into the guide hole (44).
